# EUROPEAN PATENT APPLICATION

(11) **EP 4 154 732 A1**
(43) Date of publication of application: **29.03.2023**
(21) Application number: 21808494.5
(22) Date of filing: 14.05.2021
(51) Int. Cl.: A23L 27/00, A23L 27/20, A23L 2/00, A23L 2/56

(54) **FRAGRANCE COMPOSITION, AND FOOD AND BEVERAGE**

(30) Priority: 18.05.2020 JP 2020086580
(71) Applicant: Takasago International Corporation, Tokyo 144-8721 (JP)
(72) Inventor: YOSHIDA Taichi, Hiratsuka-shi, Kanagawa 254-0073 (JP); MIKI Azusa, Hiratsuka-shi, Kanagawa 254-0073 (JP); MURAI Masato, Hiratsuka-shi, Kanagawa 254-0073 (JP)
(74) Representative: Zimmermann & Partner Patentanwälte mbB
(86) International application number: PCT/JP2021/018461
(87) International publication number: WO 2021/235360

(57) **Abstract**

The purpose of the present invention is to provide a method for obscuring (masking) the odor of p-cresol using olfactory receptor antagonism without affecting the flavor of a food or beverage. The present invention uses a specific concentration of ambrettolide, isoambrettolide, pentalide, muscone, civetone, δ-2-decenolactone, cinnamic aldehyde, β-caryophyllene oxide, sclareolide, and ethyl maltol in a food or beverage.

## Description

### Technical Field

The present invention relates to a food and/or beverage having a flavor of citrus fruit or ginger. Specifically, the present invention relates to a food and/or beverage in which a deteriorated odor (off-flavor) caused by deterioration of the aromatic components of citrus fruit or ginger is masked.

### Background Art

A food and/or beverage having a citrus fruit flavor is favored by many people because moderately sweet and sour taste is combined with a refreshing aroma peculiar to citrus fruits to provide a unique refreshing feeling. In addition, ginger has a sweet and refreshing scent and a refreshing pungent taste, and thus has been widely used since ancient times to remove the odor of meat and fish and to impart a unique flavor to food and/or beverage. However, it is known that the refreshing aroma peculiar to citrus fruits or ginger is lost over time, and instead deteriorated odor (off-flavor) is generated, which impairs the quality of food and/or beverage.

Citral is an aromatic component widely contained in citrus fruits or ginger, and is an important aromatic component having a characteristic lemon-like aroma. However, citral is known to decrease with heating or over time and produce an off-flavor. p-Cresol is known as one of the substances that cause off-flavors.

As a method of masking an off-flavor, Patent Literature 1 describes a method of containing a specific amount of cineol or cis-3-hexenol, and Patent Literature 2 describes a method of adding one or more selected from the group consisting of ethylpyruvate, methyl jasmonate, methyl dihydro jasmonate, diethyl malonate, methyl beta naphthyl ketone, maltol isobutyrate, menthol, lauric acid, acetoin, cinnamyl acetate, benzyl acetate, and α-terpineol.

It is known that ambrettolide, isoambrettolide, cyclopentadecanolide, civetone, muscone, δ-2-decenolactone, ethyl maltol, cinnamic aldehyde, β-caryophyllene oxide, and the like are used in masking compositions for hair cosmetics for masking unpleasant odors such as substrate odors, amine odors, ammonia odors, sulfur odors, acid odors, rust odors, tobacco odors, animal odors, and halogen odors (Patent Literature 3). Sclareolide is known to be used as an aroma/flavor imparting or modulating agent in flavor compositions for oral products (Patent Literature 4). β-Caryophyllene oxide is known to be used as an aroma/flavor imparting or modulating agent in citrus-like flavor compositions (Patent Literature 5). Ethyl maltol and the like are known to make fruit flavor-derived off-flavor less noticeable in clear beverages containing fruit flavors (Patent Literature 6).

On the other hand, in the fragrant cosmetics field, a method of suppressing urine odor has been provided by specifically inhibiting the activity of the olfactory receptor OR9Q2 for p-cresol (Patent Literature 7).

### Citation List

### Patent Literatures

Patent Literature 1: Japanese Patent Application Publication No. 2016-36319
Patent Literature 2: Japanese Patent Application Publication No. 2015-180715
Patent Literature 3: Japanese Patent Application Publication No. 2003-137758
Patent Literature 4: Japanese Patent Application Publication No. 2004-18431
Patent Literature 5: Japanese Patent Application Publication No. 2004-168936
Patent Literature 6: Japanese Patent Application Publication No. 2016-127818
Patent Literature 7: Japanese Patent Application Publication No. 2017-101224

### Summary of Invention

### Problems to be solved by the invention

The present invention relates to providing a method of making less noticeable (masking) p-cresol odor without affecting the flavor of citrus-flavored food and/or beverage or ginger-flavored food and/or beverage.

### Means for solution of the problems

The present inventors used olfactory receptor antagonism, and have found that among the antagonist substances of the olfactory receptor OR9Q2 for p-cresol, ambrettolide, isoambrettolide, pentalide, muscone, civetone, 8-2-decenolactone, cinnamic aldehyde, β-caryophyllene oxide, sclareolide, and ethyl maltol suppress the p-cresol odor in citrus-flavored beverages at a specific concentration without impairing the flavor of the product.

The present invention includes the contents [1] to [11] below.
[1] A method of masking an off-flavor of citral or a citral-containing product, including:
   adding one or more selected from the group consisting of ambrettolide, isoambrettolide, pentalide, muscone, civetone, 8-2-decenolactone, cinnamic aldehyde, β-caryophyllene oxide, sclareolide, and ethyl maltol to a citral-containing product.
[2] The masking method according to [1], in which the off-flavor is p-cresol.
[3] The masking method according to [1] or [2], in which the citral-containing product is a citrus-flavored food and/or beverage or a ginger-flavored food and/or beverage.
[4] A flavor composition for masking an off-flavor of a citral-containing product, including: one or more selected from the group consisting of ambrettolide, isoambrettolide, pentalide, muscone, civetone, 8-2-decenolactone, cinnamic aldehyde, β-caryophyllene oxide, sclareolide, and ethyl maltol.
[5] The flavor composition according to [4], which is citrus-like or ginger-like.
[6] The flavor composition according to [4] or [5], in which the off-flavor is p-cresol.
[7] The flavor composition according to any one of [4] to [6], in which the citral-containing product is a citrus-flavored food and/or beverage or a ginger-flavored food and/or beverage.
[8] A citral-containing product including: 0.01 ppt to 10 ppm of one or more selected from the group consisting of ambrettolide, isoambrettolide, pentalide, muscone, civetone, 8-2-decenolactone, cinnamic aldehyde, β-caryophyllene oxide, sclareolide, and ethyl maltol.
[9] The product according to [8], in which the citral-containing product is a citrus-flavored food and/or beverage or a ginger-flavored food and/or beverage.
[10] The product according to [8] or [9], further including: 10 ppb to 1 ppm of p-cresol.
[11] A method of producing a citral-containing product including: blending a citral-containing product with 0.01 ppt to 10 ppm of one or more selected from the group consisting of ambrettolide, isoambrettolide, pentalide, muscone, civetone, δ-2-decenolactone, cinnamic aldehyde, β-caryophyllene oxide, sclareolide, and ethyl maltol.

### Advantageous Effects of Invention

According to the present invention, by imparting a citrus-flavored food and/or beverage or ginger-flavored food and/or beverage with a specific amount of one or more selected from the group consisting of ambrettolide, isoambrettolide, pentalide, muscone, civetone, δ-2-decenolactone, cinnamic aldehyde, β-caryophyllene oxide, sclareolide, and ethyl maltol, it is possible to mask off-flavor caused by deterioration of the aromatic components of citrus fruit or ginger. As a result, even when a food and/or beverage with easily deteriorating aromatic components of citrus fruit or ginger produce deteriorated components due to long-term storage or the like, it is possible to provide a food and/or beverage with a flavor of citrus fruit or ginger that is closer to the design immediately after production.

### Brief Description of Drawings

Fig. 1 is a graph illustrating the effects of adding 1-oxacycloheptadecan-7-en-2-one to suppress the response of the olfactory receptor OR9Q2 for p-cresol.
Fig. 2 is a graph illustrating the effects of adding 1-oxacycloheptadecan-8-en-2-one to suppress the response of the olfactory receptor OR9Q2 for p-cresol.
Fig. 3 is a graph illustrating the effects of adding isoambrettolide to suppress the response of the olfactory receptor OR9Q2 for p-cresol.
Fig. 4 is a graph illustrating the effects of adding muscone to suppress the response of the olfactory receptor OR9Q2 for p-cresol.
Fig. 5 is a graph illustrating the effects of adding civetone to suppress the response of the olfactory receptor OR9Q2 for p-cresol.
Fig. 6 is a graph illustrating the effects of adding pentalide to suppress the response of the olfactory receptor OR9Q2 for p-cresol.
Fig. 7 is a graph illustrating the effects of adding δ-2-decenolactone to suppress the response of the olfactory receptor OR9Q2 for p-cresol.
Fig. 8 is a graph illustrating the effects of adding cinnamic aldehyde to suppress the response of the olfactory receptor OR9Q2 for p-cresol.
Fig. 9 is a graph illustrating the effects of adding β-caryophyllene oxide to suppress the response of the olfactory receptor OR9Q2 for p-cresol.
Fig. 10 is a graph illustrating the effects of adding sclareolide to suppress the response of the olfactory receptor OR9Q2 for p-cresol.
Fig. 11 is a graph illustrating the effects of adding ethyl maltol to suppress the response of the olfactory receptor OR9Q2 for p-cresol.

### Description of Embodiments

A method of searching for an antagonist substance of the olfactory receptor OR9Q2 for p-cresol is a method of searching for candidate substances for p-cresol odor suppressing materials from among test substances using an olfactory receptor polypeptide responsive to p-cresol by the following steps.
(i) A step of bringing p-cresol into contact with an olfactory receptor polypeptide selected from the group consisting of OR9Q2 and polypeptides containing an amino acid sequence having 80% or more identity with the amino acid sequence of the polypeptide OR9Q2 and being responsive to p-cresol to measure the response of the olfactory receptor polypeptide to p-cresol,
(ii) a step of mixing p-cresol with a test substance to measure the response of the olfactory receptor polypeptide used in step (i), and
(iii) comparing the measurement results in steps (i) and (ii) to select the test substance that suppresses the response as a candidate substance for the p-cresol odor suppressing material.

Each step is described below.

### <Step (i)>

The olfactory receptor polypeptide used is an olfactory receptor polypeptide selected from the group consisting of OR9Q2 and polypeptides containing an amino acid sequence having 80% or more identity with the amino acid sequence of any polypeptide thereof and being responsive to p-cresol.

OR9Q2 is a polypeptide that is registered as NM_001005283 in GenBank, and composed of an amino acid sequence (SEQ ID NO: 2) encoded by the DNA having the base sequence set forth in SEQ ID NO: 1.

The olfactory receptor used may be an olfactory receptor polypeptide selected from the group consisting of polypeptides containing an amino acid sequence having 80% or more, preferably 85% or more, more preferably 90% or more, further preferably 95% or more, and particularly preferably 98% or more identity with the amino acid sequence of this polypeptide (that is, SEQ ID NO: 2) and being responsive to p-cresol.

Olfactory receptor polypeptides may be used alone or in combination of two or more kinds.

The method of measuring the response of the olfactory receptor polypeptide is not particularly limited. For example, it may be brought into contact with p-cresol to measure the response of the olfactory receptor polypeptide on cells isolated from a living body expressing the olfactory receptor polypeptide, or it may be brought into contact with p-cresol to measure the response of the olfactory receptor polypeptide on cells in which the olfactory receptor polypeptide has been artificially expressed by genetic engineering. The contact time between the olfactory receptor polypeptide and p-cresol depends on the concentration of p-cresol and cannot be generally specified, but is usually 2 to 4 hours. The same is true when the test substance is mixed with p-cresol and brought into contact with the olfactory receptor polypeptide.

Also, the 20 N-terminal amino acid residues of bovine rhodopsin may be incorporated together with the olfactory receptor polypeptide. Incorporation of the 20 N-terminal amino acid residues of bovine rhodopsin can promote cell membrane expression of the olfactory receptor polypeptide.

Bovine rhodopsin is registered in GenBank as NM_001014890. Bovine rhodopsin is a polypeptide composed of an amino acid sequence (SEQ ID NO: 4) encoded by the DNAs 1 to 1047 of the base sequence set forth in SEQ ID NO: 3.

Further, instead of bovine rhodopsin, one may use a polypeptide containing an amino acid sequence having 80% or more, preferably 85% or more, more preferably 90% or more, further preferably 95% or more, and particularly preferably 98% or more identity with the amino acid sequence set forth in SEQ ID NO: 3 and capable of promoting cell membrane expression of the olfactory receptor polypeptide.

Note that amino acid residues of not only bovine rhodopsin but also other polypeptides may be used as long as they can promote cell membrane expression of olfactory receptor polypeptides.

The method of measuring the response of the olfactory receptor polypeptide is not particularly limited, and any method used in the art may be used. It is known, for example, that when an aromatic compound binds to an olfactory receptor polypeptide, it activates intracellular G protein, and the G protein activates adenylate cyclase, converts ATP to cyclic AMP (cAMP), and increases intracellular cAMP level. Therefore, measuring the cAMP level makes it possible to measure the response of the olfactory receptor polypeptide. As a method of measuring the cAMP level, the ELISA method, the reporter gene assay method, or the like is used. Among them, it is preferable to measure the response of the olfactory receptor polypeptide by the reporter gene assay method using a luminescent substance such as luciferase.

The response of the olfactory receptor polypeptide may be evaluated using the Fold Increase value, obtained by dividing the measurement result in the presence of p-cresol by the measurement result in the absence of p-cresol, as an index. For example, when measuring the response of an olfactory receptor polypeptide by the reporter gene assay method using a luminescent substance such as luciferase, evaluation can be performed using p-cresol at a concentration that gives a Fold Increase value of preferably 2 or more, more preferably 4 or more, and further preferably 10 or more.

### <Step (ii)>

As a method of measuring the response of the olfactory receptor polypeptide, one can use a method similar to that presented in step (i), except that p-cresol is mixed with the test substance and brought into contact with the olfactory receptor polypeptide. For example, the response of the olfactory receptor polypeptide may be measured on cells isolated from a living body expressing the olfactory receptor polypeptide, or the response of the olfactory receptor polypeptide may be measured on cells in which the olfactory receptor polypeptide has been artificially expressed by genetic engineering. In order to properly compare the measurement results in steps (i) and (ii), the measurement conditions in steps (i) and (ii) are preferably the same, except for the presence or absence of the test substance.

### <Step (iii)>

Step (iii) compares the measurement results in steps (i) and (ii), and selects test substances with suppressed responses as candidate substances for p-cresol odor suppressing materials.

If a suppression in response is observed by comparing the measurement results, the test substance used in step (ii) can be evaluated as a candidate substance for a p-cresol odor suppressing material.

All of ambrettolide, isoambrettolide, pentalide, muscone, civetone, δ-2-decenolactone, cinnamic aldehyde, β-caryophyllene oxide, sclareolide, and ethyl maltol used in the present invention, which were found by the above methods, are known aromatic components, and commercially available products can be used.

There are two kinds of aroma components, 1-oxacycloheptadecan-7-en-2-one and 1-oxacycloheptadecan-8-en-2-one, which are distributed under the name of ambrettolide, and any one of them can be used alone, or a mixture thereof in any ratio can be used.

Ambrettolide, isoambrettolide, civetone, and cinnamic aldehyde have cis and trans structural isomers, and any one of them can be used alone, or a mixture thereof in any ratio can be used.

Muscone, 8-2-decenolactone, and sclareolide have optical isomers, which may be racemates or specific optical isomers.

By adding one or more selected from the group consisting of ambrettolide, isoambrettolide, pentalide, muscone, civetone, δ-2-decenolactone, cinnamic aldehyde, β-caryophyllene oxide, sclareolide, and ethyl maltol to a citral-containing product, it is possible to mask an off-flavor of citral or citral-containing product. In addition, a flavor composition containing one or more selected from the group consisting of ambrettolide, isoambrettolide, pentalide, muscone, civetone, δ-2-decenolactone, cinnamic aldehyde, β-caryophyllene oxide, sclareolide, and ethyl maltol can be used for masking an off-flavor of a citral-containing product.

Here, the citral-containing product is not particularly limited as long as it contains citral. Citral-containing products include citrus beverages, citrus confectionery, citrus seasonings, ginger-containing foods, grated ginger, and the like.

Also, for citrus beverages, the content of p-cresol in the citral-containing product is preferably 100 ppt to 500 ppb, more preferably 1 ppb to 50 ppb. For citrus confectionery and citrus seasonings, it is preferably 1 ppb to 10 ppm, more preferably 50 ppb to 500 ppb. For ginger-containing foods and grated ginger, it is preferably 10 ppb to 10 ppm, more preferably 100 ppb to 1 ppm.

In the fragrance composition of the present invention, the "citrus-like flavor composition" is a composition used for the purpose of imparting or enhancing a flavor reminiscent of citrus fruits to a food and/or beverage. The citrus fruits include, for example, oranges such as Valencia orange, navel orange, and blood orange, grapefruits, sour-flavored citrus fruits such as lemon, lime, citrus depressa, daidai, yuzu, kabosu, sudachi, citron, and buddha's hand, miscellaneous citruses such as natsumikan, hassaku orange, hyuganatsu, oroblanco, shiranui, tangors such as iyokan and tankan, tangelos such as Seminole, pomelos such as buntan, Rutaceae such as mandarin orange, unshu mikan, ponkan, and kishu mikan, and kumquats such as kinkan, but are not limited to the citrus fruits listed here. In the flavor composition of the present invention, the "ginger-like flavor composition" is a composition used for the purpose of imparting or enhancing a flavor reminiscent of ginger to a food and/or beverage.

Other ingredients that can be blended in the flavor composition of the present invention include various synthetic flavors, natural flavors, natural essential oils, plant extracts, and the like. For example, natural essential oils, natural flavors, synthetic flavors, and the like described in "Patent Office Gazette, Collection of Well-known Prior Arts (Flavors), Part II Food Flavors, p 88-131, issued on January 14, 2000" can be mentioned.

The flavor composition of the present invention can contain a commonly used solvent such as water or ethanol; a retaining agent such as ethylene glycol, propylene glycol, dipropylene glycol, hexylene glycol, glycerin, triethyl citrate, medium-chain fatty acid triglyceride, medium-chain fatty acid diglyceride, or an animal or vegetable oil and/or fat, and the like, if necessary.

In the citral-containing product of the present invention, the "citrus-flavored food and/or beverage" refers to a food and/or beverage having an aroma and taste reminiscent of citrus fruits.

The citrus-flavored food and/or beverage includes, for example, confectionery, snacks, sweet buns, cookies, fresh confectionery, western confectionery, chocolate, chocolate confectionery, foods made mainly from milk and the like, and foods partially containing citrus ingredients such as filling cream, flower paste, whipped cream, candy, gummy candy, and jelly (which may be referred to as "citrus confectionery" in the present specification);
animal and vegetable oils and/or fats; agricultural foods and processed agricultural foods; meat and processed meat foods; fish meat and processed marine products; dairy products; steamed rice such as retort-packed rice and sprouted brown rice; noodles such as instant noodles, dried noodles, and chilled noodles; bread such as steamed pork buns and side dish bread; soup foods; cooked and processed foods such as retort pouch foods, pasta sauces, canned foods, and frozen and chilled foods; plant-based alternative foods;
seasonings such as sauces, soy sauce, tare sauces, tsuyu sauce, mayonnaise, ketchup, dressings, tube products, soup base, Chinese seasonings, Western seasonings, and various roux and spices (which may be referred to as "citrus seasoning" in the present specification);
beverages and alcoholic beverages containing citrus fruit juice, and beverages that partially use citrus ingredients such as citrus cocktails, citrus RTD (ready to drink), citrus RTS (ready to serve) (which may be referred to as "citrus drink" in the present specification), for example, sangria. In addition, as long as a citrus flavor can be felt, no fruit juice may be contained. For example, it may be a food and/or beverage containing an extract containing aromatic components extracted from citrus fruits, or a food and/or beverage containing a flavor that artificially reproduces the characteristic aromatic components of citrus fruits. Examples include citrus fruit juices, citrus fruit-flavored refreshing beverages, refreshing confectionery, chewing gums, and infused liquors obtained by soaking citrus fruit in alcohol. The beverage may or may not be carbonated. Moreover, alcohol (ethanol) may or may not be contained.

In the citral-containing product of the present invention, the "ginger-flavored food and/or beverage" refers to a food having an aroma and taste reminiscent of ginger.

The ginger-flavored food and/or beverage includes, for example, ginger-containing beverages, animal and vegetable oils and/or fats; agricultural foods and processed agricultural foods; meat and processed meat foods; fish meat and processed marine products; dairy products; steamed rice such as retort-packed rice and sprouted brown rice; noodles such as instant noodles, dried noodles, and chilled noodles; bread such as steamed pork buns and side dish bread; soup foods; cooked and processed foods such as retort pouch foods, pasta sauces, canned foods, and frozen and chilled foods; plant-based alternative foods; seasonings such as sauces, soy sauce, tare sauces, tsuyu sauce, mayonnaise, ketchup, dressings, tube products, soup base, Chinese seasonings, Western seasonings, and various roux and spices; snacks (which may be referred to as "ginger-containing food" in the present specification). Moreover, if ginger flavor can be felt, no ginger may be used. For example, it may be a food and/or beverage containing an extract containing aromatic components extracted from ginger, or a food and/or beverage containing a flavor that artificially reproduces the characteristic aromatic components of ginger.

The content of one or more selected from the group consisting of ambrettolide, isoambrettolide, pentalide, muscone, civetone, δ-2-decenolactone, cinnamic aldehyde, β-caryophyllene oxide, sclareolide, and ethyl maltol in the citrus-like flavor composition or ginger-like flavor composition of the present invention varies depending on other components to be blended and cannot be generally specified, but can generally be in a concentration range of 0.01 ppm or more and 10000 ppm or less, preferably 0.1 ppm or more and 1000 ppm or less in total, based on the weight of the flavor composition. When the content of one or more selected from the group consisting of ambrettolide, isoambrettolide, pentalide, muscone, civetone, 8-2-decenolactone, cinnamic aldehyde, β-caryophyllene oxide, sclareolide, and ethyl maltol is less than 0.01 ppm, it is impossible to obtain the effect of masking the off-flavor of citrus-flavored food and/or beverage or ginger-flavored food and/or beverage. When the content exceeds 10000 ppm, the citrus flavor or ginger flavor is impaired, which is undesirable.

In addition, the content of one or more selected from the group consisting of ambrettolide, isoambrettolide, pentalide, muscone, civetone, δ-2-decenolactone, cinnamic aldehyde, β-caryophyllene oxide, sclareolide, and ethyl maltol to be contained in a citral-containing product such as the citrus-flavored food and/or beverage or ginger-flavored food and/or beverage can be in a concentration range from 0.01 ppt to 10 ppm, preferably from 1 ppt to 100 ppb in total, based on the weight of the citral-containing product. When the content of one or more selected from the group consisting of ambrettolide, isoambrettolide, pentalide, muscone, civetone, δ-2-decenolactone, cinnamic aldehyde, β-caryophyllene oxide, sclareolide, and ethyl maltol is less than 0.01 ppt, it is impossible to obtain the effect of masking the deteriorated odor of citrus-flavored food and/or beverage or ginger-flavored food and/or beverage. When the content exceeds 10 ppm, the citrus flavor or ginger flavor is impaired, which is undesirable.

The present invention is described in more detail with reference to Examples below, but the present invention is not limited to these Examples.

### Examples

### (Measurement of Olfactory Receptor Response to p-Cresol)

### (1) Olfactory Receptor Gene Cloning

The human olfactory receptor gene was obtained by cloning from Human Genomic DNA: Female (Promega) by PCR method based on the sequence information registered in GenBank. The 20 N-terminal amino acid residues of bovine rhodopsin were incorporated into the pME18S vector, and the obtained human olfactory receptor gene was incorporated downstream thereof to obtain a human olfactory receptor gene expression vector.

### (2) Olfactory Receptor Gene Expression in HEK293T Cells

In 10 µL of Opti-MEM I (gibco), 0.05 µg of human olfactory receptor gene expression vector, 0.01 µg of RTP1S vector, 0.01 µg firefly luciferase vector pGL4.29 (Promega) containing cAMP response element promoter, and 0.005 µg of Renilla luciferase vector pGL4.74 (Promega) containing thymidine kinase promoter were dissolved to prepare a gene solution (for one well). HEK293T cells were seeded at 100 µL each in a 96-well plate (Biocoat, Coming) at the number of cells reaching confluence after 24 hours, and a gene solution was added to each well by the lipofection method according to the usage of Lipofectamine 3000 to introduce genes into the cells, and the cells were cultured at 37°C in a 5% carbon dioxide atmosphere for 24 hours.

### (3) Luciferase Reporter Gene Assay

After removing the culture medium, the resultant was prepared with CD293 (gibco) medium (20 µML-glutamine added) so as to have a concentration for measuring the aroma substance to be tested, 50 µL of which was added each and stimulated for 3 hours, and then luciferase activity was measured according to the method of using the Dual-Luciferase Reporter Assay System (Promega). The response intensity of the olfactory receptor polypeptide was expressed as a Fold Increase value obtained by dividing the luciferase activity produced by stimulating the aroma substance by the luciferase activity produced in the test system containing no aroma substance.

### (Evaluation of OR9Q2 Response Inhibitory Effect for p-Cresol)

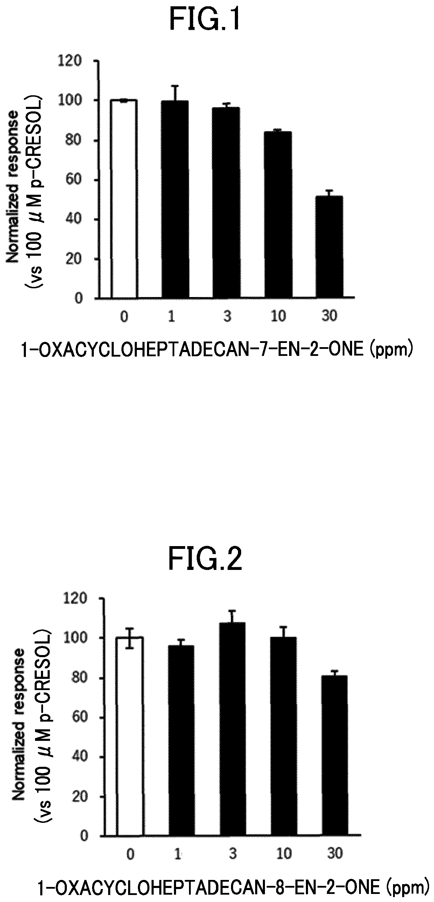

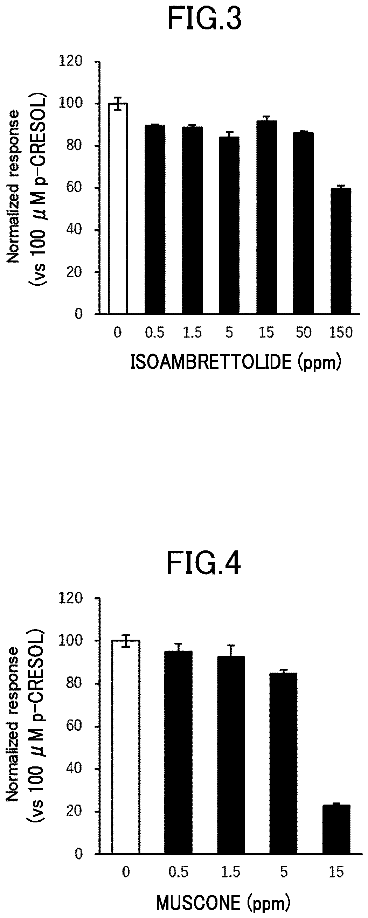

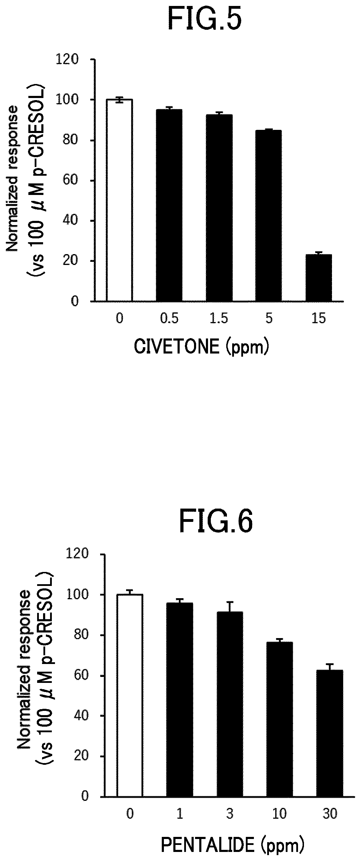

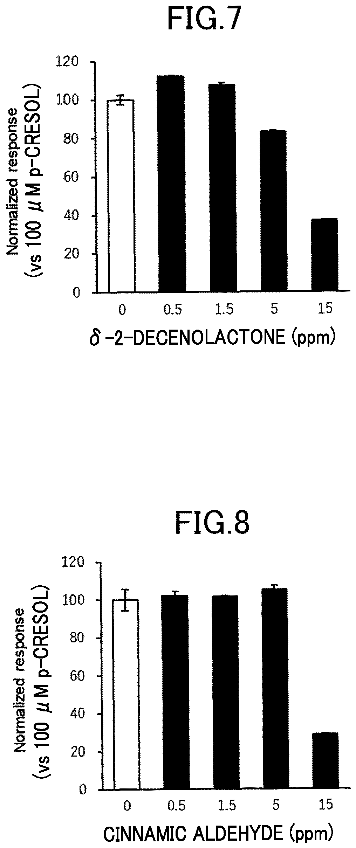

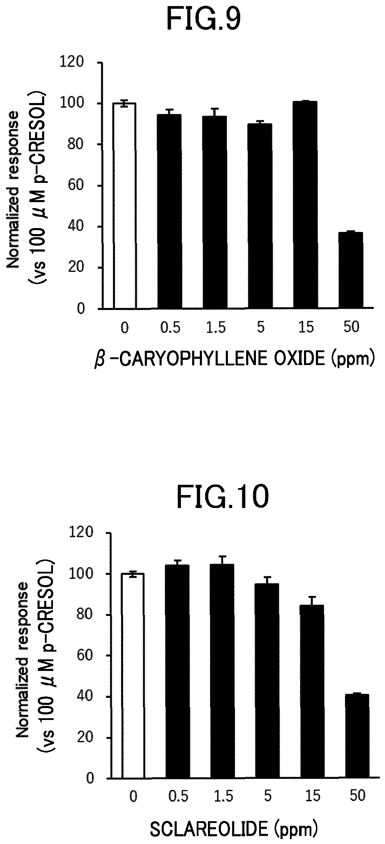

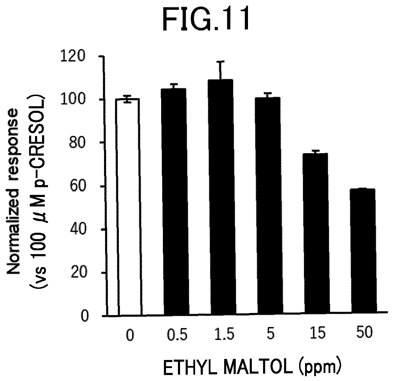

p-Cresol at 100 µM was mixed with various concentrations of 1-oxacycloheptadecan-7-en-2-one, 1-oxacycloheptadecan-8-en-2-one, isoambrettolide, pentalide, muscone, civetone, δ-2-decenolactone, cinnamic aldehyde, β-caryophyllene oxide, sclareolide, and ethyl maltol, and receptor responses were measured in cells expressing OR9Q2. The ratio of the Fold Increase value in the test in which each compound was mixed was calculated, where the Fold Increase value in the test in none of these compounds was mixed was set to 100. Figs. 1 to 11 present the results. Ambrettolide, isoambrettolide, pentalide, muscone, civetone, δ-2-decenolactone, cinnamic aldehyde, β-caryophyllene oxide, sclareolide, and ethyl maltol exhibited the effect of suppressing the response of OR9Q2 to p-cresol in a concentration-dependent manner.

### Example 1 (p-Cresol Odor Masking Effect of 1-Oxacycloheptadecan-7-En-2-One)

To 2 g of lemon flavor obtained by making lemon oil into an essence, purified water was added to adjust the total amount to 1000 ml. To this citrus-flavored beverage, p-cresol adjusted to a concentration of 1% by mass with 95% ethanol was added to 50 ppb in the citrus-flavored beverage. To this p-cresol-containing citrus-flavored beverage, 1-oxacycloheptadecan-7-en-2-one was added at the concentrations presented in Table 1 to confirm the p-cresol odor intensity (masking effect) and the influence on the citrus flavor of each sample.

For the test, seven skilled panelists were selected to perform sensory evaluation. The p-cresol odor intensity of the p-cresol-containing citrus-flavored beverage without added 1-oxacycloheptadecan-7-en-2-one was determined as "Rating: 4," and the p-cresol odor intensity of the p-cresol-free citrus-flavored beverage was determined as "Rating: 0," and the p-cresol odor intensity (masking effect) of each sample was relatively evaluated according to the following evaluation criteria.

### (Evaluation Criteria)

| | |
|---|---|
| Feels a strong p-cresol odor | : 4 points |
| Feels a p-cresol odor | : 3 points |
| Feels a bit of p-cresol odor | : 2 points |
| Feels almost no p-cresol odor | : 1 point |
| Feels no p-cresol odor | : 0 points |

In addition, the influence of the citrus-flavored beverage on the citrus flavor was evaluated absolutely according to the following evaluation criteria for the presence or absence of off- flavor other than p-cresol odor and citrus flavor (Off-Flavor Intensity).

### (Evaluation Criteria)

| | |
|---|---|
| Feels a strong off-flavor | : 4 points |
| Feels an off-flavor | : 3 points |
| Feels a bit of off- flavor | : 2 points |
| Feels almost no off-flavor | : 1 point |
| Feels no off-flavor | : 0 points |

The results are as in Table 1, presenting the average score of the evaluation results for each panelist.

**Table 1**

| Concentration of 1-Oxacycloheptadecan-7-En-2-One Added | p-Cresol Odor Intensity | Off-Flavor Intensity |
|---|---|---|
| 100 ppb | 0.7 | 3.9 |
| 10 ppb | 0.9 | 3.6 |
| 1 ppb | 1.3 | 2.9 |
| 100 ppt | 1.7 | 2.0 |
| 10 ppt | 2.0 | 1.4 |
| 1 ppt | 2.4 | 1.0 |
| 0.1 ppt | 2.7 | 0.7 |
| 0.01 ppt | 3.7 | 0.4 |

It is apparent from the results in Table 1 that 1-oxacycloheptadecan-7-en-2-one masks the p-cresol odor and does not affect the citrus flavor at a concentration of 0.1 ppt or more and 1 ppb or less.

### Example 2 (p-Cresol Odor Masking Effect of 1-Oxacycloheptadecan-8-En-2-One)

A sample prepared in the same manner as in Example 1 was used to confirm the p-cresol odor intensity (masking effect) of 1-oxacycloheptadecan-8-en-2-one and the influence on the citrus flavor. The same evaluation method as in Example 1 was used. The results are as in Table 2, presenting the average score for each panelist.

**Table 2**

| Concentration of 1-Oxacycloheptadecan-8-En-2-One Added | p-Cresol Odor Intensity | Off-Flavor Intensity |
|---|---|---|
| 100 ppb | 0.4 | 3.7 |
| 10 ppb | 0.7 | 3.4 |
| 1 ppb | 1.1 | 2.9 |
| 100 ppt | 1.4 | 2.3 |
| 10 ppt | 1.9 | 1.6 |
| 1 ppt | 2.6 | 0.9 |
| 0.1 ppt | 2.9 | 0.7 |
| 0.01 ppt | 3.6 | 0.3 |

It is apparent from the results in Table 2 that 1-oxacycloheptadecan-8-en-2-one masks the p-cresol odor and does not affect the citrus flavor at a concentration of 0.1 ppt or more and 1 ppb or less.

### Example 3 (p-Cresol Odor Masking Effect of Isoambrettolide)

A sample prepared in the same manner as in Example 1 was used to confirm the p-cresol odor intensity (masking effect) of isoambrettolide and the influence on the citrus flavor. The same evaluation method as in Example 1 was used. The results are as in Table 3, presenting the average score for each panelist.

**Table 3**

| Concentration of Isoambrettolide Added | p-Cresol Odor Intensity | Off-Flavor Intensity |
|---|---|---|
| 100 ppb | 0.9 | 3.6 |
| 10 ppb | 1.3 | 3.3 |
| 1 ppb | 1.3 | 2.9 |
| 100 ppt | 1.6 | 2.6 |
| 10 ppt | 2.1 | 2.0 |
| 1 ppt | 2.4 | 1.6 |
| 0.1 ppt | 2.7 | 1.3 |
| 0.01 ppt | 3.7 | 0.6 |

It is apparent from the results in Table 3 that isoambrettolide masks the p-cresol odor and does not affect the citrus flavor at a concentration of 0.1 ppt or more and 1 ppb or less.

### Example 4 (p-Cresol Odor Masking Effect of Pentalide)

A sample prepared in the same manner as in Example 1 was used to confirm the p-cresol odor intensity (masking effect) of pentalide and the influence on the citrus flavor. The same evaluation method as in Example 1 was used. The results are as in Table 4, presenting the average score for each panelist.

**Table 4**

| Concentration of Pentalide Added | p-Cresol Odor Intensity | Off-Flavor Intensity |
|---|---|---|
| 100 ppb | 0.6 | 3.7 |
| 10 ppb | 1.0 | 3.3 |
| 1 ppb | 1.4 | 2.7 |
| 100 ppt | 1.9 | 2.3 |
| 10 ppt | 2.0 | 1.7 |
| 1 ppt | 2.6 | 1.4 |
| 0.1 ppt | 2.9 | 0.9 |
| 0.01 ppt | 3.6 | 0.4 |

It is apparent from the results in Table 4 that pentalide masks the p-cresol odor and does not affect the citrus flavor at a concentration of 0.1 ppt or more and 1 ppb or less.

### Example 5 (p-Cresol Odor Masking Effect of Muscone)

A sample prepared in the same manner as in Example 1 was used to confirm the p-cresol odor intensity (masking effect) of muscone and the influence on the citrus flavor. The same evaluation method as in Example 1 was used. The results are as in Table 5, presenting the average score for each panelist.

**Table 5**

| Concentration of Muscone Added | p-Cresol Odor Intensity | Off-Flavor Intensity |
|---|---|---|
| 100 ppb | 0.3 | 3.9 |
| 10 ppb | 0.4 | 3.6 |
| 1 ppb | 0.9 | 2.7 |
| 100 ppt | 1.7 | 2.6 |
| 10 ppt | 1.9 | 2.0 |
| 1 ppt | 2.1 | 1.7 |
| 0.1 ppt | 2.4 | 1.1 |
| 0.01 ppt | 2.7 | 0.9 |
| 0.001 ppt | 3.7 | 0.4 |

It is apparent from the results in Table 5 that muscone masks the p-cresol odor and does not affect the citrus flavor at a concentration of 0.01 ppt or more and 1 ppb or less.

### Example 6 (p-Cresol Odor Masking Effect of Civetone)

A sample prepared in the same manner as in Example 1 was used to confirm the p-cresol odor intensity (masking effect) of civetone and the influence on the citrus flavor. The same evaluation method as in Example 1 was used. The results are as in Table 6, presenting the average score for each panelist.

**Table 6**

| Concentration of Civetone Added | p-Cresol Odor Intensity | Off-Flavor Intensity |
|---|---|---|
| 100 ppb | 0.4 | 3.9 |
| 10 ppb | 0.9 | 3.7 |
| 1 ppb | 1.0 | 2.9 |
| 100 ppt | 1.1 | 2.7 |
| 10 ppt | 1.6 | 2.1 |
| 1 ppt | 1.9 | 2.0 |
| 0.1 ppt | 2.3 | 1.6 |
| 0.01 ppt | 2.7 | 0.9 |
| 0.001 ppt | 3.7 | 0.7 |

It is apparent from the results in Table 6 that civetone masks the p-cresol odor and does not affect the citrus flavor at a concentration of 0.01 ppt or more and 1 ppb or less.

### Example 7 (p-Cresol Odor Masking Effect of δ-2-Decenolactone)

A sample prepared in the same manner as in Example 1 was used to confirm the p-cresol odor intensity (masking effect) of δ-2-decenolactone and the influence on the citrus flavor. The same evaluation method as in Example 1 was used. The results are as in Table 7 presenting the average score for each panelist.

**Table 7**

| Concentration of δ-2-Decenolactone Added | p-Cresol Odor Intensity | Off-Flavor Intensity |
|---|---|---|
| 10 ppm | 0.7 | 3.6 |
| 1 ppm | 1.3 | 3.4 |
| 100 ppb | 1.6 | 2.7 |
| 10 ppb | 2.0 | 2.0 |
| 1 ppb | 2.3 | 1.4 |
| 100 ppt | 2.4 | 1.1 |
| 10 ppt | 2.7 | 0.6 |
| 1 ppt | 3.9 | 0.1 |

It is apparent from the results in Table 7 that δ-2-decenolactone masks the p-cresol odor and does not affect the citrus flavor at a concentration of 10 ppt or more and 100 ppb or less.

### Example 8 (p-Cresol Odor Masking Effect of Cinnamic Aldehyde)

A sample prepared in the same manner as in Example 1 was used to confirm the p-cresol odor intensity (masking effect) of cinnamic aldehyde and the influence on the citrus flavor. The same evaluation method as in Example 1 was used. The results are as in Table 8 presenting the average score for each panelist.

**Table 8**

| Concentration of Cinnamic Aldehyde Added | p-Cresol Odor Intensity | Off-Flavor Intensity |
|---|---|---|
| 100 ppm | 0.6 | 3.7 |
| 10 ppm | 0.9 | 2.6 |
| 1 ppm | 1.7 | 2.1 |
| 100 ppb | 2.0 | 1.9 |
| 10 ppb | 2.0 | 1.1 |
| 1 ppb | 2.3 | 0.9 |
| 100 ppt | 2.7 | 0.4 |
| 10 ppt | 3.9 | 0.3 |

It is apparent from the results in Table 8 that cinnamic aldehyde masks the p-cresol odor and does not affect the citrus flavor at a concentration of 100 ppt or more and 10 ppm or less.

### Example 9 (p-Cresol Odor Masking Effect of β-caryophyllene Oxide)

A sample prepared in the same manner as in Example 1 was used to confirm the p-cresol odor intensity (masking effect) of β-caryophyllene oxide and the influence on the citrus flavor. The same evaluation method as in Example 1 was used. The results are as in Table 9 presenting the average score for each panelist.

**Table 9**

| Concentration of β-caryophyllene Oxide Added | p-Cresol Odor Intensity | Off-Flavor Intensity |
|---|---|---|
| 100 ppm | 0.4 | 3.7 |
| 10 ppm | 1.0 | 3.4 |
| 1 ppm | 1.0 | 2.6 |
| 100 ppb | 1.6 | 2.0 |
| 10 ppb | 1.7 | 1.6 |
| 1 ppb | 2.1 | 1.3 |
| 100 ppt | 2.6 | 1.0 |
| 10 ppt | 3.9 | 0.6 |

It is apparent from the results in Table 9 that β-caryophyllene oxide masks the p-cresol odor and does not affect the citrus flavor at a concentration of 100 ppt or more and 1 ppm or less.

### Example 10 (p-Cresol Odor Masking Effect of Sclareolide)

A sample prepared in the same manner as in Example 1 was used to confirm the p-cresol odor intensity (masking effect) of sclareolide and the influence on the citrus flavor. The same evaluation method as in Example 1 was used. The results are as in Table 10 presenting the average score for each panelist.

**Table 10**

| Concentration of Sclareolide Added | p-Cresol Odor Intensity | Off-Flavor Intensity |
|---|---|---|
| 10 ppm | 0.4 | 3.4 |
| 1 ppm | 1.0 | 2.6 |
| 100 ppb | 1.1 | 2.0 |
| 10 ppb | 1.9 | 1.3 |
| 1 ppb | 2.1 | 0.9 |
| 100 ppt | 2.6 | 0.3 |
| 10 ppt | 3.6 | 0.1 |

It is apparent from the results in Table 10 that sclareolide masks the p-cresol odor and does not affect the citrus flavor at a concentration of 100 ppt or more and 1 ppm or less.

### Example 11 (p-Cresol Odor Masking Effect of Ethyl Maltol)

A sample prepared in the same manner as in Example 1 was used to confirm the p-cresol odor intensity (masking effect) of ethyl maltol and the influence on the citrus flavor. The same evaluation method as in Example 1 was used. The results are as in Table 11 presenting the average score for each panelist.

**Table 11**

| Concentration of Ethyl Maltol Added | p-Cresol Odor Intensity | Off-Flavor Intensity |
|---|---|---|
| 100 ppm | 0.4 | 3.9 |
| 10 ppm | 1.3 | 2.4 |
| 1 ppm | 1.4 | 2.1 |
| 100 ppb | 1.6 | 1.9 |
| 10 ppb | 2.0 | 1.3 |
| 1 ppb | 2.3 | 0.6 |
| 100 ppt | 2.7 | 0.6 |
| 10 ppt | 3.7 | 0.3 |

It is apparent from the results in Table 11 that ethyl maltol masks the p-cresol odor and does not affect the citrus flavor at a concentration of 100 ppt or more and 10 ppm or less.

### Example 12 (p-Cresol Odor Masking Effect of 1-Oxacycloheptadecan-7-En-2-One)

Lemon cold-pressed oil was added to the tablet having the composition presented in Table A at a concentration of 1% by mass, and medium chain fatty acid triglycerides (MCT) was used to adjust p-cresol to a concentration of 0.1%, which was further added so as to reach 200 ppb in the citrus flavored confectionery. To this p-cresol-containing citrus-flavored confectionery, 1-oxacycloheptadecan-7-en-2-one was added at the concentrations presented in Table 12, and then tableting was performed to confirm the p-cresol odor intensity (masking effect) and the influence on the citrus flavor of each sample.

### (Raw Materials for Tablets)

| Raw Material | Blend Ratio (Parts by Mass) |
|---|---|
| Sorbitol | 96.5% |
| sugar ester | 2.0% |
| aspartame | 1.0% |
| Fine-particle silicon dioxide | 0.5% |

### Tablet Diameter: 7 mm

Six skilled panelists were selected to perform the same sensory evaluation as in Example 1. The results are as in Table 12, presenting the average score of the evaluation results for each panelist.

**Table 12**

| Concentration of 1-Oxacycloheptadecan-7-En-2-One Added | p-Cresol Odor Intensity | Off-Flavor Intensity |
|---|---|---|
| 400 ppb | 1.3 | 2.5 |
| 40 ppb | 2.0 | 1.7 |
| 4 ppb | 2.5 | 1.5 |
| 400 ppt | 2.7 | 1.3 |
| 40 ppt | 3.2 | 1.0 |

It is apparent from the results in Table 12 that 1-oxacycloheptadecan-7-en-2-one masks the p-cresol odor and does not affect the citrus flavor at a concentration of 400 ppt or more and 400 ppb or less.

### Example 13 (p-Cresol Odor Masking Effect of 1-Oxacycloheptadecan-8-En-2-One)

Table 13 presents the results of evaluating the masking effect of 1-oxacycloheptadecan-8-en-2-one in the same manner as in Example 12.

**Table 13**

| Concentration of 1-Oxacycloheptadecan-8-En-2-One Added | p-Cresol Odor Intensity | Off-Flavor Intensity |
|---|---|---|
| 400 ppb | 1.7 | 2.0 |
| 40 ppb | 1.8 | 1.2 |
| 4 ppb | 2.5 | 1.0 |
| 400 ppt | 3.2 | 1.0 |
| 40 ppt | 3.3 | 0.8 |

It is apparent from the results in Table 13 that 1-oxacycloheptadecan-8-en-2-one masks the p-cresol odor and does not affect the citrus flavor at a concentration of 4 ppb or more and 400 ppb or less.

### Example 14 (p-Cresol Odor Masking Effect of Isoambrettolide)

Table 14 presents the results of evaluating the masking effect of isoambrettolide in the same manner as in Example 12.

**Table 14**

| Concentration of Isoambrettolide Added | p-Cresol Odor Intensity | Off-Flavor Intensity |
|---|---|---|
| 400 ppb | 1.5 | 2.3 |
| 40 ppb | 1.8 | 1.5 |
| 4 ppb | 2.5 | 1.3 |
| 400 ppt | 2.7 | 1.2 |
| 40 ppt | 3.0 | 1.2 |

It is apparent from the results in Table 14 that isoambrettolide masks the p-cresol odor and does not affect the citrus flavor at a concentration of 400 ppt or more and 400 ppb or less.

### Example 15 (p-Cresol Odor Masking Effect of Pentalide)

Table 15 presents the results of evaluating the masking effect of pentalide in the same manner as in Example 12.

**Table 15**

| Concentration of Pentalide Added | p-Cresol Odor Intensity | Off-Flavor Intensity |
|---|---|---|
| 400 ppb | 1.5 | 2.8 |
| 40 ppb | 1.7 | 1.8 |
| 4 ppb | 2.3 | 1.5 |
| 400 ppt | 2.7 | 1.3 |
| 40 ppt | 2.8 | 1.0 |

It is apparent from the results in Table 15 that pentalide masks the p-cresol odor and does not affect the citrus flavor at a concentration of 400 ppt or more and 400 ppb or less.

### Example 16 (p-Cresol Odor Masking Effect of 1-Oxacycloheptadecan-8-En-2-One)

To commercially available grated raw ginger, p-cresol adjusted to a concentration of 0.1% with 95% ethanol was added to a concentration of 600 ppb in the ginger. To this p-cresol-containing ginger, 1-oxacycloheptadecan-8-en-2-one was added at the concentrations presented in Table 16 to confirm the p-cresol odor intensity (masking effect) and the influence on the ginger flavor of each sample.

Nine skilled panelists were selected to perform the same sensory evaluation as in Example 1. The results are as in Table 16, presenting the average score of the evaluation results for each panelist.

**Table 16**

| Concentration of 1-Oxacycloheptadecan-8-En-2-One Added | p-Cresol Odor Intensity | Off-Flavor Intensity |
|---|---|---|
| 10 ppb | 1.4 | 3.0 |
| 1 ppb | 1.7 | 2.3 |
| 100 ppt | 2.3 | 1.7 |
| 10 ppt | 2.4 | 0.9 |
| 1 ppt | 3.2 | 0.2 |

It is apparent from the results in Table 16 that 1-oxacycloheptadecan-8-en-2-one masks the p-cresol odor and does not affect the ginger flavor at a concentration of 10 ppt or more and 1 ppb or less.

### Example 17 (p-Cresol Odor Masking Effect of Pentalide)

Table 17 presents the results of evaluating the masking effect of pentalide in the same manner as in Example 16.

**Table 17**

| Concentration of Pentalide Added | p-Cresol Odor Intensity | Off-Flavor Intensity |
|---|---|---|
| 10 ppb | 1.1 | 3.0 |
| 1 ppb | 1.3 | 2.3 |
| 100 ppt | 1.6 | 1.3 |
| 10 ppt | 2.7 | 0.7 |
| 1 ppt | 3.3 | 0.2 |

It is apparent from the results in Table 17 that pentalide masks the p-cresol odor and does not affect the ginger flavor at a concentration of 10 ppt or more and 1 ppb or less.

### Example 18 (p-Cresol Odor Masking Effect of 1-Oxacycloheptadecan-8-En-2-One)

To a commercially available lemon dressing, p-cresol adjusted to a concentration of 0.1% with 95% ethanol was added to 500 ppb in the lemon dressing. To this p-cresol-containing lemon dressing, 1-oxacycloheptadecan-8-en-2-one was added at the concentrations presented in Table 18 to confirm the p-cresol odor intensity (masking effect) and the influence on the citrus flavor of each sample.

Nine skilled panelists were selected to perform the same sensory evaluation as in Example 1. The results are as in Table 18, presenting the average score of the evaluation results for each panelist.

**Table 18**

| Concentration of 1-Oxacycloheptadecan-8-En-2-One Added | p-Cresol Odor Intensity | Off-Flavor Intensity |
|---|---|---|
| 10 ppb | 1.0 | 2.6 |
| 1 ppb | 1.1 | 2.0 |
| 100 ppt | 1.6 | 1.2 |
| 10 ppt | 2.2 | 0.6 |
| 1 ppt | 2.9 | 0.0 |

It is apparent from the results in Table 18 that 1-oxacycloheptadecan-8-en-2-one masks the p-cresol odor and does not affect the citrus flavor at a concentration of 1 ppt or more and 10 ppb or less.

### Example 19 (p-Cresol Odor Masking Effect of Pentalide)

Table 19 presents the results of evaluating the masking effect of pentalide in the same manner as in Example 18.

**Table 19**

| Concentration of Pentalide Added | p-Cresol Odor Intensity | Off-Flavor Intensity |
|---|---|---|
| 10 ppb | 0.9 | 2.1 |
| 1 ppb | 1.1 | 1.3 |
| 100 ppt | 1.9 | 0.6 |
| 10 ppt | 2.8 | 0.1 |
| 1 ppt | 3.6 | 0.1 |

It is apparent from the results in Table 19 that pentalide masks the p-cresol odor and does not affect the citrus flavor at a concentration of 10 ppt or more and 10 ppb or less.

## Claims

1. A method of masking an off-flavor of citral or a citral-containing product, comprising:
adding one or more selected from the group consisting of ambrettolide, isoambrettolide, pentalide, muscone, civetone, δ-2-decenolactone, cinnamic aldehyde, β-caryophyllene oxide, sclareolide, and ethyl maltol to a citral-containing product.

2. The masking method according to claim 1, wherein the off-flavor is p-cresol.

3. The masking method according to claim 1 or 2, wherein the citral-containing product is a citrus-flavored food and/or beverage or a ginger-flavored food and/or beverage.

4. A flavor composition for masking an off-flavor of a citral-containing product, comprising:
one or more selected from the group consisting of ambrettolide, isoambrettolide, pentalide, muscone, civetone, δ-2-decenolactone, cinnamic aldehyde, β-caryophyllene oxide, sclareolide, and ethyl maltol.

5. The flavor composition according to claim 4, which is citrus-like or ginger-like.

6. The flavor composition according to claim 4 or 5, wherein the off-flavor is p-cresol.

7. The flavor composition according to any one of claims 4 to 6, wherein the citral-containing product is a citrus-flavored food and/or beverage or a ginger-flavored food and/or beverage.

8. A citral-containing product comprising:
0.01 ppt to 10 ppm of one or more selected from the group consisting of ambrettolide, isoambrettolide, pentalide, muscone, civetone, δ-2-decenolactone, cinnamic aldehyde, β-caryophyllene oxide, sclareolide, and ethyl maltol.

9. The product according to claim 8, wherein the citral-containing product is a citrus-flavored food and/or beverage or a ginger-flavored food and/or beverage.

10. The product according to claim 8 or 9, further comprising: 10 ppb to 1 ppm of p-cresol.

11. A method of producing a citral-containing product comprising:
blending a citral-containing product with 0.01 ppt to 10 ppm of one or more selected from the group consisting of ambrettolide, isoambrettolide, pentalide, muscone, civetone, δ-2-decenolactone, cinnamic aldehyde, β-caryophyllene oxide, sclareolide, and ethyl maltol.
